# DEMANDE DE BREVET EUROPEEN

(11) **EP 1 371 953 A1**
(43) Date de publication de la demande: **17.12.2003**
(21) Numéro de dépôt: 02405480.1
(22) Date de dépôt: 11.06.2002
(51) Int. Cl.: G01F 11/26

(54) **Dispositif distributeur-doseur**

(71) Demandeur: Huguenin, Freddy, 2126 Les Verrières (CH)
(72) Inventeur: Huguenin, Freddy, 2126 Les Verrières (CH)
(74) Mandataire: Ganguillet, Cyril

(57) **Abrégé**

Dispositif distributeur-doseur d'un produit en particules solides associé à une extrémité frontale d'un récipient à paroi latérale rigide ou semi-rigide contenant le dit produit, le dit dispositif comprenant un conduit transversal d'axe rectiligne dont une première extrémité forme un orifice interne, communiquant avec l'espace intérieur du récipient contenant le produit et des moyens d'obturation du dit orifice externe; l'inclinaison du dit axe rectiligne est choisie de sorte que sa distance, au niveau de l'orifice interne, par rapport à la dite extrémité frontale est inférieure à sa distance par rapport à la même extrémité frontale au niveau de l'orifice externe de sortie du produit.

## Description

La présente invention concerne un dispositif distributeur-doseur pour produits en particules, tels que sucre, thé, café en grains ou en poudre, riz, etc.

La présente invention concerne plus particulièrement un dispositif distributeur-doseur selon le préambule de la revendication 1.

On connaît le traditionnel sucrier dispenseur à tube interne sur l'axe vertical. Ce sucrier, pratique pour les restaurants, ne fonctionne cependant pas ou très mal lorsqu'il est au trois quarts vide et doit de ce fait être rechargé très régulièrement. Des variantes de ce dispositif, décrites par exemple par GB 158960 ou US 2,190092, sont munies de tubes-dispenseurs coudés, dans lesquels un produit en granulés peut rester bloqué. De tels dispositifs ne conviendraient pas pour dispenser du café lyophilisé parce que ces récipients n'ont pas de fermeture étanche. Dans une autre variante décrite dans US 4,109830, le récipient doit être d'abord basculé couvercle vers le bas, puis tourné autour de son axe de symétrie pour délivrer une dose. Ceci s'avère fastidieux à l'usage.

On connaît également d'autres dispositifs distributeurs-doseurs. On citera à ce propos les publications de brevets ou de demandes de brevet FR 2755431, GB 2115785, GB 736834 et CH 656788. Toutefois, les dispositifs décrits dans ces publications sont de conception relativement complexe, comportant un grand nombre de pièces, et en particulier des pièces mobiles, et ne répondent pas dans une mesure optimale aux besoins de la pratique. Les poussoirs, tirettes ou tiroirs, godets et autres mécanismes dont sont munis les dispositifs connus sont sujets à des pannes ou blocages.

La matière granulaire ou poudreuse a un comportement difficile à maîtriser, quelle que soit la taille des grains, et qui varie selon son granulat, sa forme, sa composition, son hygrométrie, etc. En fait, les grains peuvent se comporter, suivant les situations, comme un solide ou un fluide.

Afin de mieux maîtriser l'écoulement du produit, il est souhaitable de l'obliger à se comporter comme un fluide dont le comportement est prévisible.

Le but de la présente invention est donc de créer un dispositif plus simple que les dispositifs connus, permettant un écoulement régulier et susceptible de réalisations correspondant à un design de qualité.

A cet effet, la présente invention a pour objet un dispositif distributeur-doseur d'un produit en particules solides associé à une extrémité frontale d'un récipient à paroi latérale rigide ou semi-rigide contenant le dit produit, le dit dispositif comprenant un conduit transversal d'axe rectiligne dont une première extrémité forme un orifice latéral externe de sortie du produit et dont une deuxième extrémité forme un orifice interne, communiquant avec l'espace intérieur du récipient contenant le produit et des moyens d'obturation du dit orifice externe, caractérisé en ce que l'inclinaison du dit axe rectiligne est choisie de sorte que sa distance, au niveau de l'orifice interne, par rapport à la dite extrémité frontale est inférieure à sa distance par rapport à la même extrémité frontale au niveau de l'orifice externe de sortie du produit.

Le dispositif distributeur-doseur selon l'invention peut constituer le fond d'un récipient en métal ou en matière plastique; en particulier dans ce dernier cas, la majeure partie des pièces le constituant peut être moulée d'une pièce avec la paroi latérale du récipient, qui est rigide s'agissant de parois épaisses, ou semi-rigide s'agissant de parois minces.

Le dispositif distributeur-doseur selon l'invention peut constituer le couvercle d'un récipient, et peut dans ce cas remplacer des couvercles pré-existants, enfoncés ou vissés sur un récipient lors du conditionnement du produit.

Selon un mode d'exécution, la face intérieure de la dite extrémité frontale est conformée de manière à constituer une trémie ouverte sur l'espace intérieur du récipient de manière à canaliser le dit produit en particules vers le dit orifice interne du conduit lorsque le récipient est positionné avec la dite extrémité frontale vers le bas.

Selon un mode d'exécution, la dite trémie comprend une surface oblique recouvrant partiellement la dite extrémité frontale, en séparant l'espace intérieur du récipient dudit conduit.

Selon un mode d'exécution, le dit conduit est cylindrique et présente une génératrice commune avec la dite surface oblique.

Selon un mode d'exécution, le dit conduit est tronconique et présente une génératrice commune avec la dite surface oblique.

Selon un mode d'exécution, la dite surface oblique constitue une paroi du dit conduit.

Selon un mode d'exécution, la dite surface oblique est plane.

Selon un mode d'exécution, le profil du dit conduit est choisi parmi les profils parallélépipédiques, prismatiques et pyramidaux.

Selon un mode d'exécution, les extrémités des parois latérales du dit conduit viennent au contact de la paroi latérale du récipient.

Selon un mode d'exécution, l'orifice interne du conduit débouche dans une portion de paroi adjacente à la surface oblique et reliant la dite surface oblique à la dite extrémité frontale.

Selon un mode d'exécution, la surface oblique et le conduit présentent une découpe à l'aplomb de la partie du dit conduit jouxtant l'orifice interne.

Selon un mode d'exécution, la surface oblique porte au moins une ailette s'étendant dans le conduit dans la direction du dit conduit.

Selon un mode d'exécution, le dit conduit transversal présente au moins une paroi intérieure longitudinale, agencée de façon à subdiviser le dit conduit en un conduit principal et un conduit secondaire.

Selon un mode d'exécution, le dit conduit transversal porte un conduit latéral communiquant avec l'espace intérieur du récipient.

Selon un mode d'exécution, le dit conduit transversal présente des perforations communiquant avec l'espace intérieur du récipient.

Selon un mode d'exécution, les dits moyens d'obturation comprennent un obturateur mobile basculant, articulé à la dite extrémité frontale de telle sorte que dans la position obturée de l'orifice externe, les dits moyens obturateurs ne dépassent pas du contour du dit récipient.

Selon un mode d'exécution, le dit obturateur mobile porte un élément d'obturation de forme conjuguée à la forme de l'orifice externe, constitué d'un matériau élastique.

Selon un mode d'exécution, le dit élément d'obturation est une bille mobile en rotation autour d'un axe porté par le dit obturateur.

Selon un mode d'exécution, le dit élément d'obturation est une plaquette souple et le pourtour du dit orifice externe porte deux bossages circulaires concentriques entourant le dit orifice.

Selon un mode d'exécution, les moyens d'obturation comprennent un obturateur mobile coulissant agencé sur la face extérieure de la paroi latérale du récipient.

Selon un mode d'exécution, le dit obturateur mobile comprend une plaquette en matériau élastique agencée de manière à pouvoir venir en regard du pourtour du dit orifice externe, et le dit obturateur coulissant comprend des moyens d'étanchéité capables d'augmenter la pression exercée par la plaquette élastique sur le pourtour du dit orifice externe en position obturée.

On décrit en détail ci-après quelques formes d'exécution du dispositif selon l'invention, données à titre d'exemples et représentées dans le dessin annexé dont :
- la fig. 1 représente une vue en coupe verticale axiale d'un premier mode d'exécution, sous forme d'un couvercle vissable;
- la fig. 2 est une vue de dessus de la fig. 1;
- la fig. 3 est une vue agrandie du pourtour de l'orifice externe du dispositif de la fig. 1;
- la fig. 4 représente en coupe la plaquette d'obturation placée devant l'orifice de la fig. 3;
- la fig. 5 est une vue en coupe verticale axiale d'un deuxième mode d'exécution du dispositif selon l'invention;
- la fig. 6 est une vue en plan de dessus de la fig. 5;
- la fig. 7 est une coupe partielle selon la ligne A-A' de la fig. 5;
- la fig. 8 est une coupe axiale d'un troisième mode d'exécution du dispositif selon l'invention;
- la fig. 9 est une vue de dessus de la fig. 8;
- la fig. 10 est une coupe partielle selon la ligne A-A' de la fig. 8;
- la fig. 11 est une vue éclatée du deuxième mode d'exécution du dispositif selon l'invention;
- la fig. 12 présente le quatrième mode d'exécution assemblé;
- la fig. 13 est une coupe axiale d'un quatrième mode d'exécution de l'invention;
- la fig. 14 est une vue en plan de dessus de la fig. 13;
- la fig. 15 est une coupe partielle selon la ligne A-A' de la fig. 13;
- la fig. 16 montre une cinquième forme d'exécution du dispositif en coupe verticale selon la ligne B-B de la fig. 19, l'orifice externe étant en position obturée;
- la fig. 17 est une vue partielle de la fig. 16, l'orifice externe étant ouvert;
- la fig. 18 est une vue partielle en coupe selon la ligne A-A de la fig. 16;
- la fig. 19 est une vue en coupe selon la ligne C-C de la fig. 16;
- la fig. 20 est une vue en coupe verticale d'une sixième forme d'exécution;
- la fig. 21 est une vue en coupe selon la ligne D-D de la fig. 20;
- la fig. 22 est une coupe axiale d'une septième forme d'exécution du dispositif distributeur-verseur sous forme d'un couvercle amovible vissé sur un récipient;
- la fig. 23 est une vue en plan de dessus du dispositif de la fig. 22;
- la fig. 24 est une vue en coupe selon la ligne A-A de la fig. 23;
- la fig. 25 représente une huitième forme d'exécution du dispositif distributeur-doseur selon l'invention sous forme d'un couvercle vissable sur un récipient, l'orifice extérieur étant obturé;
- la fig. 26 montre le même dispositif que la fig. 25, l'orifice extérieur étant ouvert;
- la fig. 27 représente un détail de l'obturateur;
- la fig. 28 montre un mode d'exécution de l'obturateur selon l'invention en perspective;
- les fig. 29 a, b, c, d, e, f montrent schématiquement le mode de fonctionnement de l'obturateur de la fig. 28;

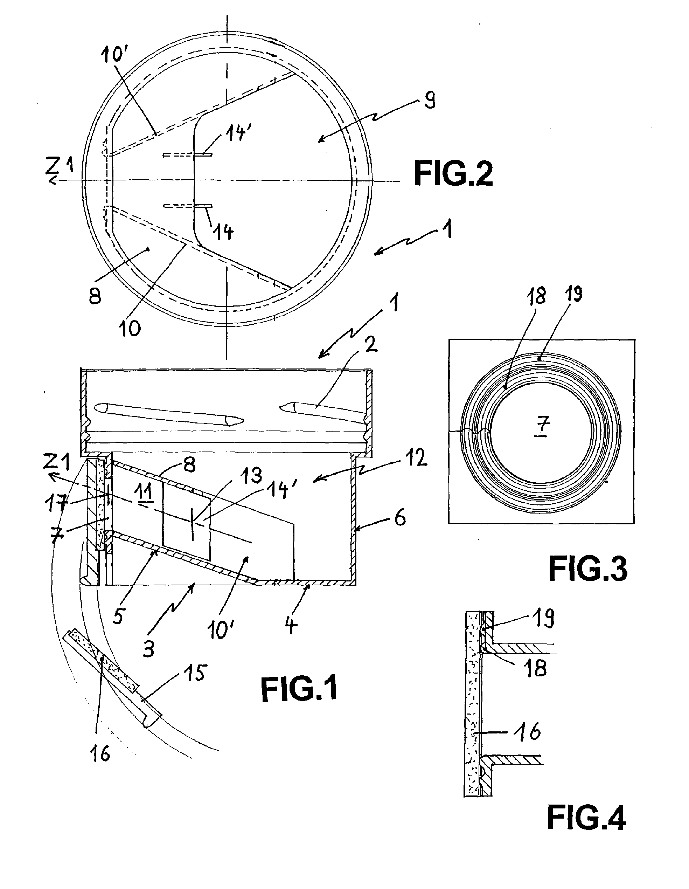

Les fig. 1 et 2 montrent une première forme d'exécution de l'invention sous forme d'un couvercle 1 qui peut être vissé au moyen d'un filetage 2 sur un récipient de produit muni du filetage correspondant au niveau de son ouverture. Le fond 3 du couvercle 1 comprend une portion plane 4 perpendiculaire à l'axe de vissage et une autre portion plane 5 oblique par rapport à cet axe. Au-dessus de la zone de la portion 5 la plus éloignée du plan de la portion 4, un orifice externe 7 est agencé dans la paroi latérale 6 du couvercle 1.

Une plaque plane oblique 8 est disposée à l'intérieur du couvercle de telle façon que son bord supérieur se situe au-dessus de l'orifice 7. Dans le mode d'exécution représenté à la fig. 1, la plaque 8 présente la même inclinaison que la portion 5 du fond du couvercle. Son inclinaison pourrait toutefois être différente. Comme le montrent les fig.1 et 2, le fond du couvercle porte deux parois verticales 10, 10' sur lesquelles repose la plaque 8. La plaque 8 comprend une large découpe 9 montrée sur la fig. 2. Dans le mode d'exécution représenté à la fig. 2, le bord de la découpe 9 coïncide avec la position des parois 10 et 10'. Toutefois, la plaque 8 pourrait surplomber ces parois 10 et 10'.

La plaque 8 forme avec les parois 10 et 10' et avec la portion oblique 5 du fond un conduit transversal oblique 11, dont la forme générale est prismatique. Si l'inclinaison de la plaque 8 était différente de celle de la portion 5, le profil de ce conduit serait pyramidal. La plaque 8 forme avec les portions environnantes de la paroi latérale 6 et que la portion du fond 4 une zone à la fois en communication avec le conduit 11 et l'espace intérieur du récipient, faisant fonction de trémie.

Comme on peut le voir sur les fig. 1 et 2, le conduit 11 présente un axe rectiligne oblique Z1 incliné par rapport à l'axe de vissage, lequel correspond à l'axe du récipient, de telle manière que sa distance au niveau 13 de l'orifice interne du conduit 11, par rapport à la portion 4 du fond du couvercle, est inférieure à sa distance par rapport à la même portion 4 du couvercle au niveau 17 de l'orifice externe 7 de sortie du produit.

La plaque 8 peut porter sur son dessous, plongeant dans le conduit 11 parallèlement à l'axe Z1, deux ailettes 14, 14'. Ces ailettes contribuent à réguler le débit du produit en poudre.

L'orifice externe 7 est obturable par un obturateur 15 dont le fonctionnement est schématiquement représenté sur la fig. 1 et qui sera décrit plus en détails plus loin. Pour améliorer l'étanchéité de l'obturateur en position fermée, comme l'illustrent les fig. 3 et 4, le pourtour de l'orifice 7 est muni de deux bossages 18 et 19 circulaires concentriques entourant le dit orifice. L'obturateur porte une plaquette de matériau élastique 16, par exemple du caoutchouc, qui vient s'appliquer contre les bossages 18 et 19 en position obturée. En variante, c'est le pourtour de l'orifice comprenant les bossages circulaires qui peut être réalisé - par exemple par injection bi-matière - en matériau souple, alors que la plaquette obturatrice est réalisée en matériau plus dur.

Pour soutirer du produit en poudre ou en grains du récipient, celui-ci est placé couvercle en-bas, l'obturateur est ouvert, puis le récipient est simplement incliné de façon à verser le produit via le conduit 11. La dose versée peut être adaptée selon les besoins en laissant le récipient en position inclinée plus ou moins longtemps. L'écoulement du produit s'arrête lorsque le récipient est remis en position verticale.

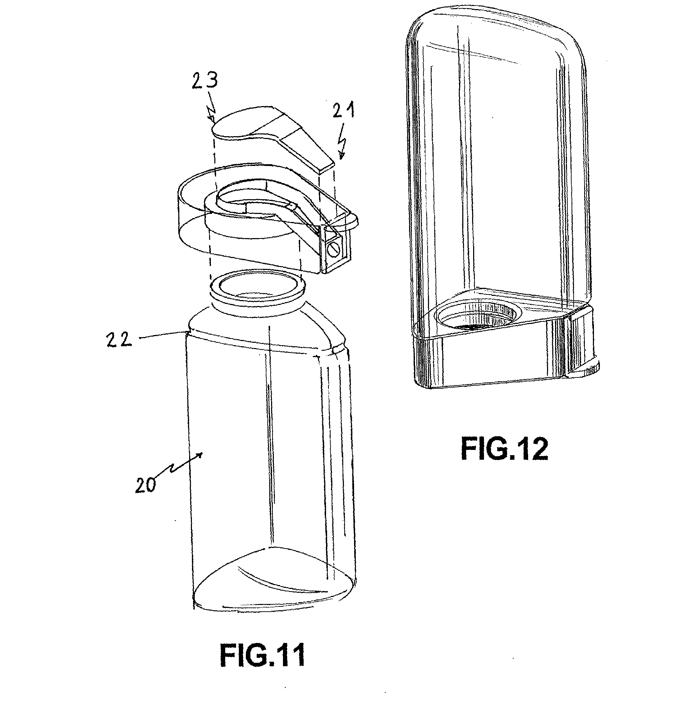

Les fig. 11 et 12 illustrent l'agencement, en tant que fond d'un récipient 20, d'un deuxième mode d'exécution 21 du dispositif selon l'invention. Le dispositif 21 est montré assemblé au récipient 20 sur la fig. 12, et représenté en vue éclatée à la fig. 11. Le dispositif 21 peut être soudé ou clippé au récipient 20 au niveau des nervures 22.

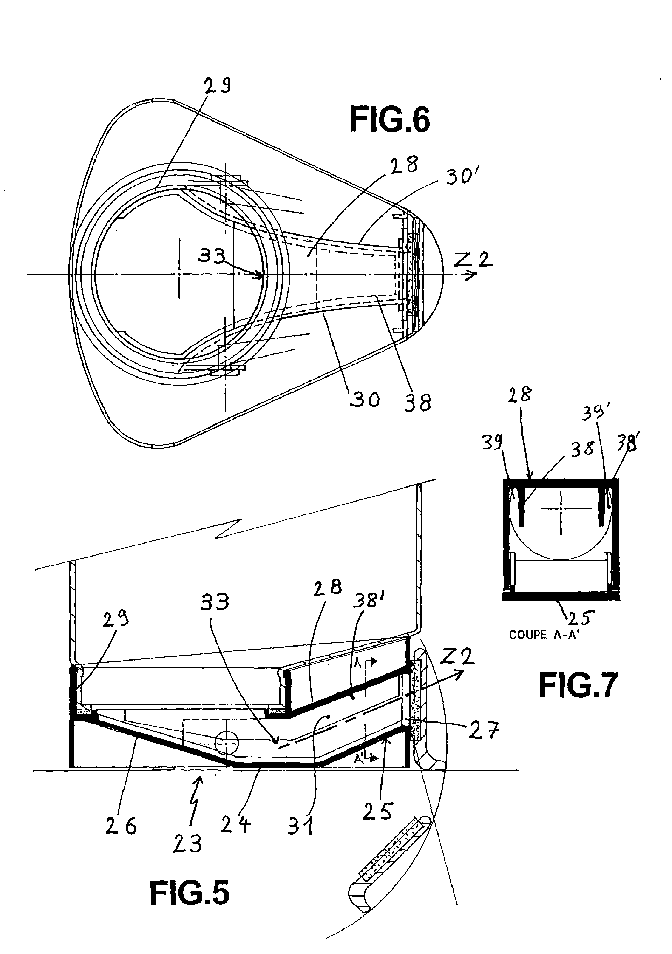

Les fig. 5, 6 et 7 montrent les détails de construction de ce deuxième mode d'exécution. Comme le montre la fig. 5, l'extrémité 23 du dispositif comporte une portion de paroi 24 perpendiculaire à l'axe du récipient et une portion 25 inclinée constituant une paroi du conduit transversal 31 de soutirage du produit. La paroi 23 peut comporter une deuxième portion 26 à l'opposé de la portion 25, également inclinée. Le dispositif 21 comporte un goulot 29, prolongé latéralement par une portion de surface plane oblique 28, adjacente à deux portions de surface verticales incurvées 30, 30' visibles sur la fig. 6. Les portions de surface obliques 25 et 28 forment avec les parois 30, 30' un conduit 31 transversal dont l'axe Z2 présente une inclinaison telle que sa distance au niveau de l'orifice interne 33 par rapport à la portion de surface 24 est inférieure à sa distance par rapport à la même surface au niveau de l'orifice externe 27 de sortie du produit.

Selon la composition et les propriétés physiques de certains produits en particules, il peut être souhaitable d'éviter au moins partiellement que l'entrée d'air dans le récipient, compensant la sortie du produit, ne s'opère en un flux croisant directement et à contre-courant le flux sortant de particules du produit. Dans ce but, dans ce mode d'exécution, deux parois 38 et 38' sont agencées parallèlement aux parois 30, 30' et à faible distance de celles-ci, sous la paroi 28, et prolongent celles-ci au-delà de la découpe 29. Deux conduits secondaires 39, 39' sont ainsi ménagés entre respectivement les parois 30 et 38, et les parois 30' et 38'. Le flux sortant de particules suit essentiellement le conduit principal autour de l'axe Z2, laissant libre les conduits secondaires 39, 39' et la possibilité à l'air de pénétrer dans le récipient, compensant la dépression intérieure, tout en évitant le granulat.

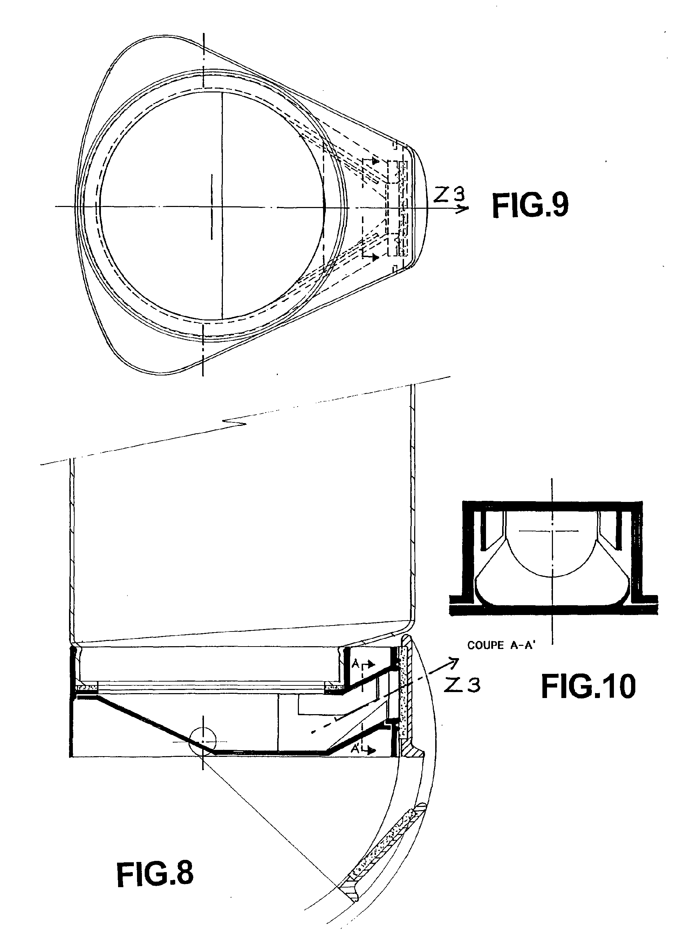

Les fig. 8, 9 et 10 montrent un troisième mode d'exécution, très proche du deuxième mode d'exécution, dont la description des fig. 5, 6 et 7 s'applique mutatis mutandis. Il s'en distingue essentiellement par le fait que le goulot du récipient est beaucoup plus grand que dans le deuxième mode d'exécution et que, partant, la longueur du conduit transversal d'axe Z3 s'en trouve nettement réduite.

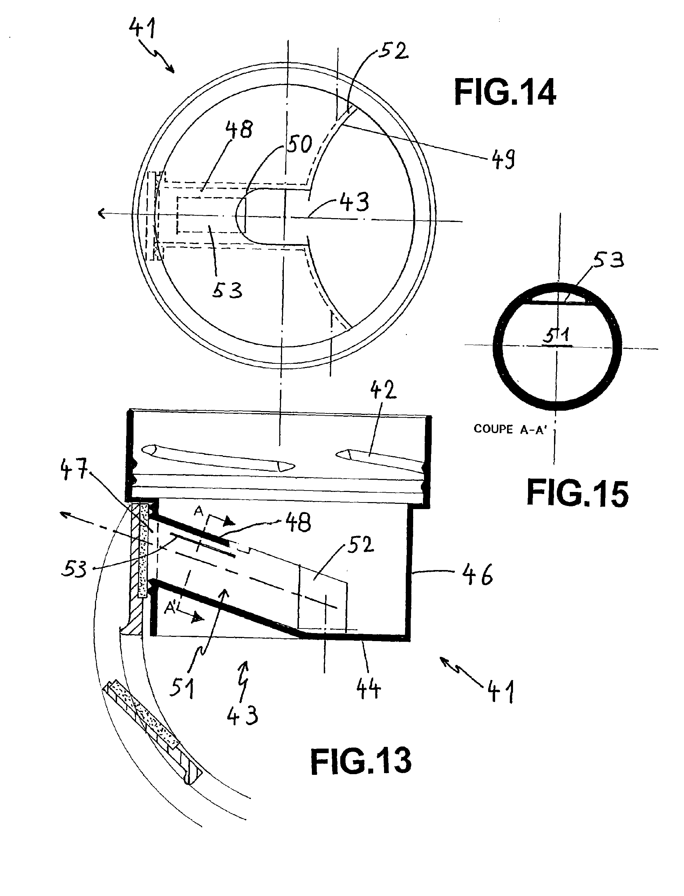

La quatrième forme d'exécution représentée au fig. 13, 14 et 15 est un dispositif distributeur intégré dans un bouchon 41 vissable avec un pas de vis 42. Elle se distingue des trois premières formes d'exécution par le fait que le conduit transversal 51 est une portion de tube cylindrique. Ce tube s'étend depuis un orifice 47 ménagé dans la paroi latérale 46 du bouchon en direction du fond 43, 44 du bouchon, il est surmonté d'un plan oblique 48 tangent à une génératrice du cylindre. Cette surface plane oblique 48 présente une première découpe 49 en forme d'arc de cercle à l'aplomb d'une surface verticale 52 comme le montre la fig. 14, ainsi qu'une deuxième découpe 50 en forme de U, à l'aplomb de la partie du conduit jouxtant l'orifice interne 43. Le conduit cylindrique présente, vu du dessus, la même découpe, agrandissant ainsi l'orifice interne du conduit.

A l'intérieur du conduit cylindrique, contre sa voûte, se trouve une lamelle 53 constituant une paroi de séparation intérieure longitudinale, subdivisant le conduit transversal 51 en un conduit principal et un conduit secondaire. Selon la nature et la consistance du produit en particules, la sortie du produit peut se faire essentiellement par le conduit principal, tandis que l'entrée d'air compensatrice de pression peut s'effectuer par le conduit secondaire.

L'orifice externe présente deux bossages, comme dans le premier mode d'exécution, contre lesquels vient s'appuyer une plaquette d'étanchéité de l'obturateur.

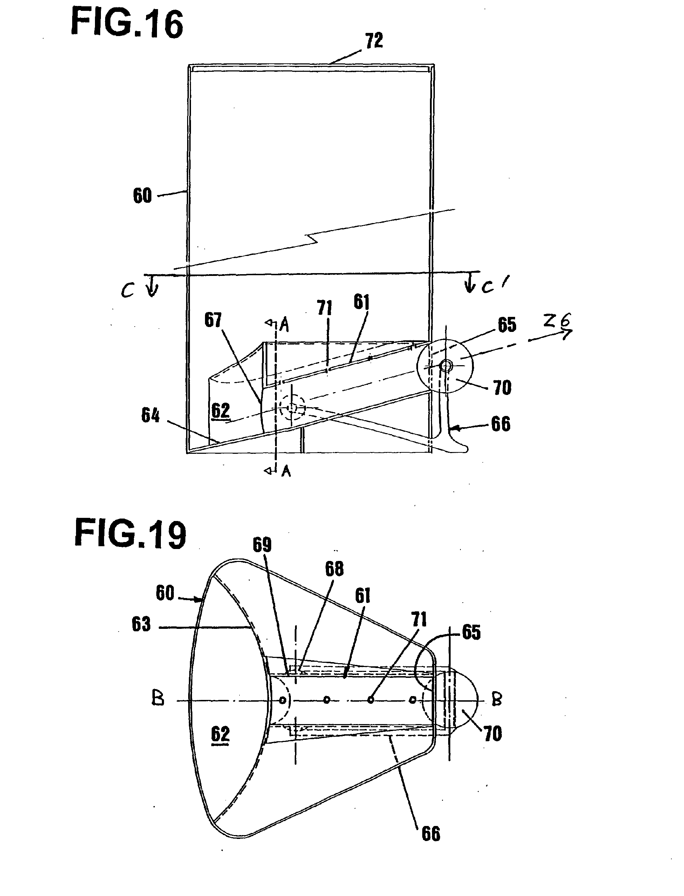

Le dispositif distributeur-doseur de la cinquième forme d'exécution (fig. 16 à 19) est entièrement intégré à un récipient 60 en matière plastique rigide, ayant en plan une forme générale triangulaire et des parois verticales. Il est disposé à la base de ce récipient et comporte essentiellement un élément de conduit cylindrique transversal 61 qui s'ouvre à l'intérieur du récipient 60 par une ouverture d'entrée 67 dans un logement 62 délimité par une portion de paroi verticale incurvée convexe de la base triangulaire isocèle de ce récipient. Le fond du logement 62 est un plan oblique 64 qui s'étend dans le prolongement de la génératrice inférieure du conduit 61, ladite génératrice s'étendant en montant selon une pente de l'ordre de 15 degrés, par exemple, entre l'ouverture d'entrée 67 et une ouverture de sortie 65 ménagée dans un segment de paroi verticale plane constituant le sommet tronqué du triangle isocèle de base du récipient 60.

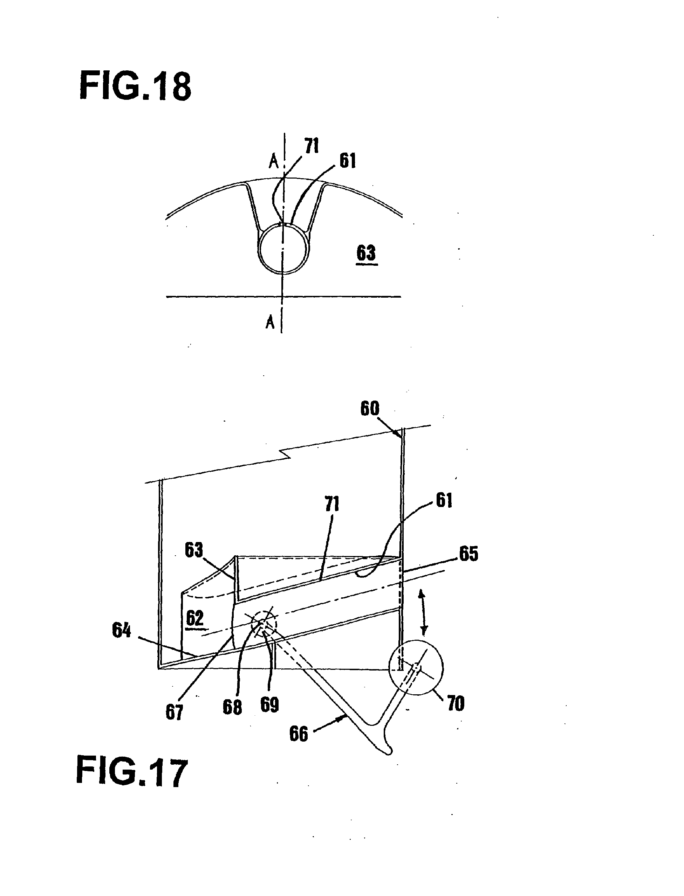

L'ouverture de sortie 65 est équipée d'un obturateur basculant 66, visible en position fermée à la fig. 16 et en position ouverte à la fig. 17. Cet obturateur est constitué d'un support en une pièce, en forme d'étrier avec deux branches parallèles munies de pivots 68 engagés dans des oeillets correspondants 69 venus de moulage dans les faces extérieures du conduit 61. Il comporte en outre une bille 70 en un matériau légèrement élastique qui est traversée par un axe rigide constituant l'élément de liaison prévu entre les deux branches de l'étrier 66 pour que ce dernier puisse pivoter sur les pivots coaxiaux 68 comme on le voit en comparant les fig. 16 et 17. Le support en forme d'étrier est conformé de façon à être en tension lorsqu'il est en position de fermeture; le diamètre de la bille 70 étant ajusté à celui de l'ouverture 65, on voit que celle-ci est fermée de manière étanche quand l'obturateur se trouve dans la position de la fig. 16.

On note encore que des orifices de petit diamètre 71 sont répartis de distance en distance le long de la génératrice supérieure du conduit cylindrique 61 pour éviter une reprise d'humidité par le produit à l'intérieur du seul conduit.

Le récipient 60 est fermé normalement par un couvercle plat 72, soudé.

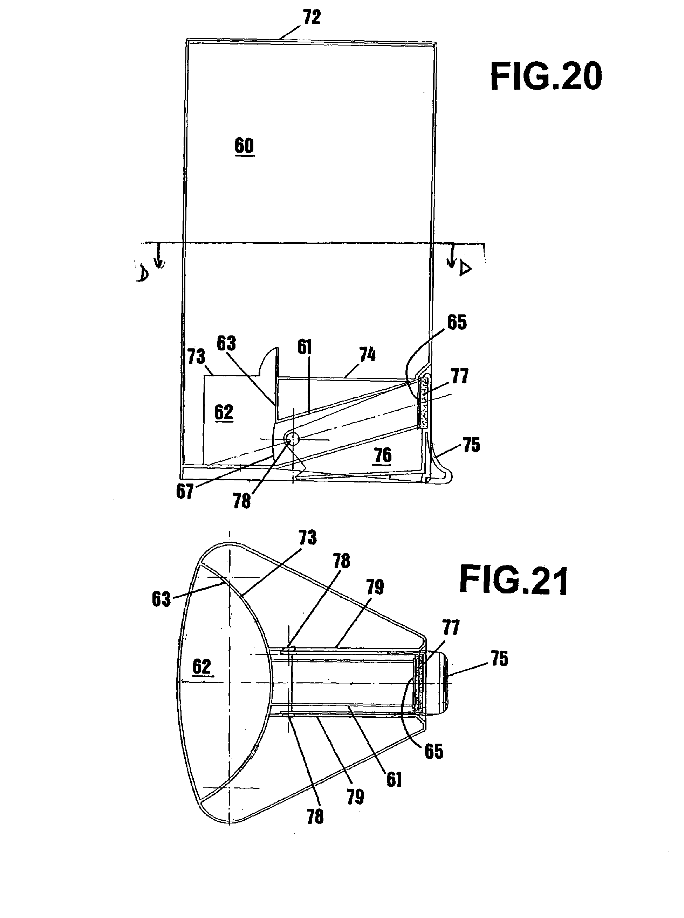

La sixième forme d'exécution donnée en exemple sur la base des fig. 20 et 21, est semblable sur de nombreux points à la cinquième et les constituants identiques seront désignés par les mêmes chiffres de référence. Ainsi, le distributeur proprement dit est disposé à la base du récipient 60 et comporte le conduit 61 avec l'ouverture de sortie 65 et l'ouverture d'entrée 67 débouchant dans le logement de dosage 62 délimité par le segment de la paroi 63. Toutefois, ce segment de paroi présente ici un bord supérieur 73 qui est plat à ses deux extrémités et incurvé convexe au centre et les éléments extrêmes se trouvent à la même hauteur qu'un fond plat 74 fermant l'espace interne du récipient 60 vers le bas.

Le distributeur-doseur de cette forme d'exécution est aussi pourvu d'un obturateur basculant désigné ici par le chiffre 75. Cet organe est constitué d'une pièce 76 en forme d'étrier avec deux joues parallèles et une paroi frontale munie d'un prolongement replié pour former un élément de préhension. La paroi frontale est garnie d'une plaque mince de mousse de plastique 77 placée de manière à venir s'appuyer contre l'ouverture 65 lorsque l'obturateur est en position de fermeture. Les extrémités des joues sont pourvues de pivots 78 en saillie sur leurs faces externes de manière à s'engager dans des ouvertures percées dans deux éléments de paroi verticaux 79 qui délimitent un logement de manoeuvre sous le récipient 60. A partir de la position de la fig. 20, la manoeuvre de l'obturateur 75 au moyen de l'élément de préhension en avant de la paroi frontale fait pivoter l'étrier 76 autour de l'axe commun des pivots 78 et amène l'obturateur dans une position analogue à celle de la fig. 17.

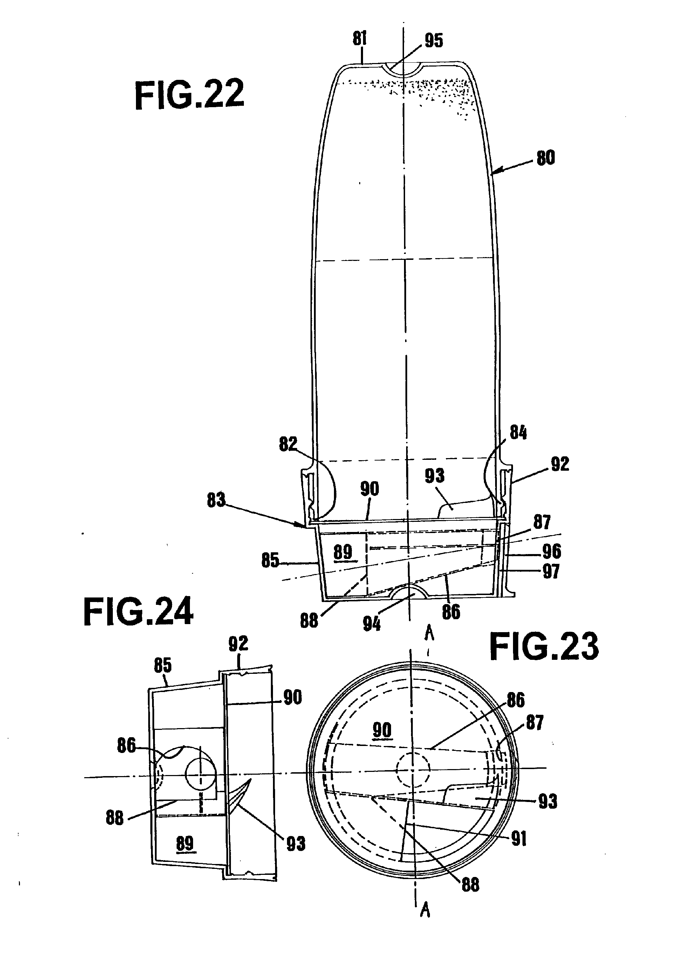

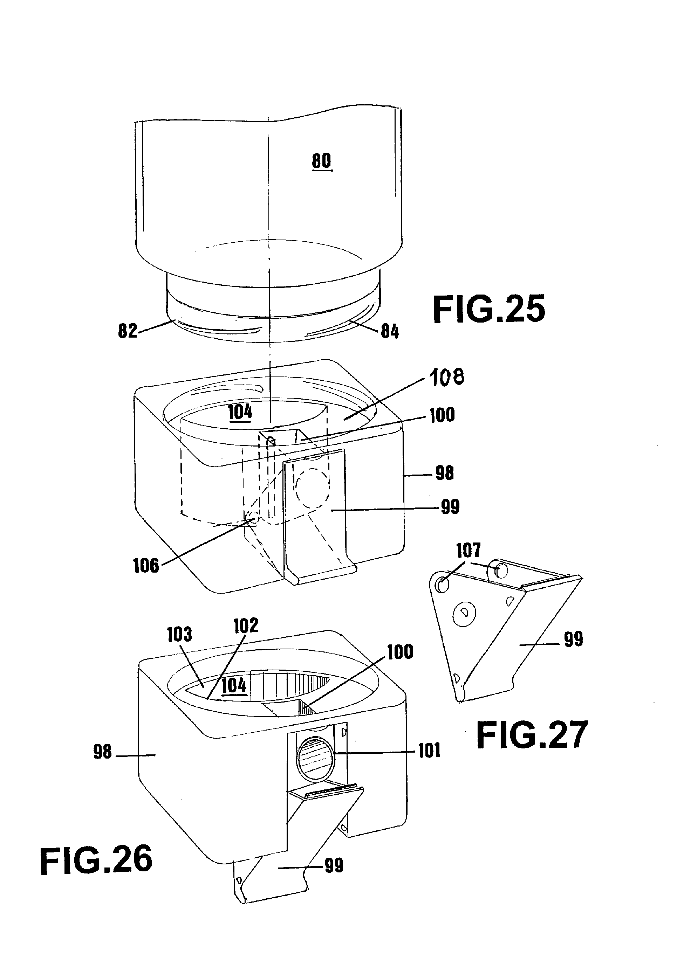

La forme d'exécution des figures 22 à 24 et sa variante des figures 25 à 27 ont en commun avec celles des fig. 1 à 4 et 13 à 15 le fait que le dispositif distributeur - doseur proprement dit est séparable du récipient contenant le produit en particules. Ainsi, le récipient cylindrique à paroi bombée 80 des fig. 22 et 23 est conçu de manière à être présenté à la vente dans une position verticale mais avec son fond 81 en bas et le bord 82 de sa paroi en haut. En outre, le dispositif distributeur - doseur 83 (fig. 24) est séparé du conditionnement. Il peut être acquis à part. Une membrane par exemple en papier d'aluminium recouvre étroitement le bord 82 et un couvercle usuel (non représenté) est vissé sur le pas de vis 84 du bocal 80. Le dispositif distributeur - doseur 83 doit donc être posé sur le bocal 80 avant l'emploi. Il est équipé dans cette forme d'exécution, d'un organe en forme d'éperon (décrit plus loin) destiné à arracher la membrane de fermeture du bocal 80 lors de sa mise en place.

La structure du dispositif 83 est visible aux fig. 22 à 24. Elle comporte dans un récipient cylindrique de faible hauteur à paroi latérale 85 un conduit transversal 86 qui s'étend diamétralement depuis une ouverture de sortie 87 située dans la paroi 85 en s'élargissant progressivement jusqu'à une ouverture d'entrée 88 débouchant dans un logement de dosage 89 partiellement recouvert par un fond plat 90 qui présente une découpure 91 triangulaire avec un côté curviligne faisant communiquer le logement de dosage 89 avec l'espace intérieur du bocal quand le dispositif distributeur - doseur est en place sur le bocal 80. La paroi 85 se prolonge vers le haut par un rebord 92 avec un filetage interne qui s'accroche au filetage 84 lors de la mise en place du dispositif 83. On voit que lors de ce mouvement, l'éperon 93 qui s'étend en saillie au-dessus du fond 90 arrache la membrane de fermeture du bocal 80, de sorte que le logement de dosage 89 communique largement avec l'espace interne du récipient 80. Les deux cuvettes 94 et 95 aux extrémités de l'axe de symétrie de l'ensemble récipient et distributeur permettent de manipuler ce dernier à volonté pour amener la dose de produit en particules voulue dans le logement de dosage.

L'ouverture de sortie 87 est normalement obturée dans cette forme d'exécution par un clapet coulissant 96 guidé entre deux nervures parallèles 97 en saillie sur la face extérieure de la paroi 85.

Finalement, les fig. 25 à 27 représentent une variante de la septième forme d'exécution dans laquelle le bocal 80 sera de préférence en verre et le distributeur - doseur est un étrier basculant 99, semblable à l'étrier 75 avec deux joues parallèles triangulaires et une paroi frontale plane, les reliant de manière rigide. Le conduit transversal de dosage possède une ouverture de sortie circulaire 101 située au centre d'une des faces planes extérieures du corps de distributeur 98 et s'étend radialement avec une section constante, jusqu'à une paroi arquée 102 délimitant dans le corps 98, avec une paroi homologue 103, un logement de dosage 104. Ce dernier communique avec le bocal par un goulot d'entrée également circulaire. De plus, le conduit transversal communique avec le bocal par un conduit annexe latéral 105 et un creux 100, qui peut recevoir une pastille filtrante/desséchante, ménagé, comme on le voit à la fig. 25, dans une surface plane 108 du corps 98, qui a un contour circulaire et vient s'appuyer sur le bord circulaire 82 lors du vissage du distributeur 98 sur le bocal 80. Des pivots saillants 106 sont formés dans les faces planes et parallèles qui limitent dans le corps 98 les échancrures recevant les joues de l'étrier 99. Ces pivots saillants assurent le pivotement de l'étrier dans les forures 107 (fig. 27). Comme dans les autres formes d'exécution pourvues d'obturateurs basculants, des éléments saillants sont prévus sur les faces latérales des étriers pour assurer leur maintien soit en position ouverte, soit en position fermée, par un effet de frottement. Enfin, on voit qu'à la fig. 25, l'obturateur 99 est représenté en position fermée, le corps 98 du distributeur étant placé en regard de l'ouverture du bocal 80. A la fig. 26, le corps du distributeur est vu indépendamment du bocal, l'obturateur étant en position ouverte.

Comme on le voit sur les dessins, les obturateurs basculant 66, 75 et coulissant 96 sont conformés et disposés de façon à fermer automatiquement l'orifice de sortie 65, 87, 101 lorsque l'on repose le récipient après utilisation.

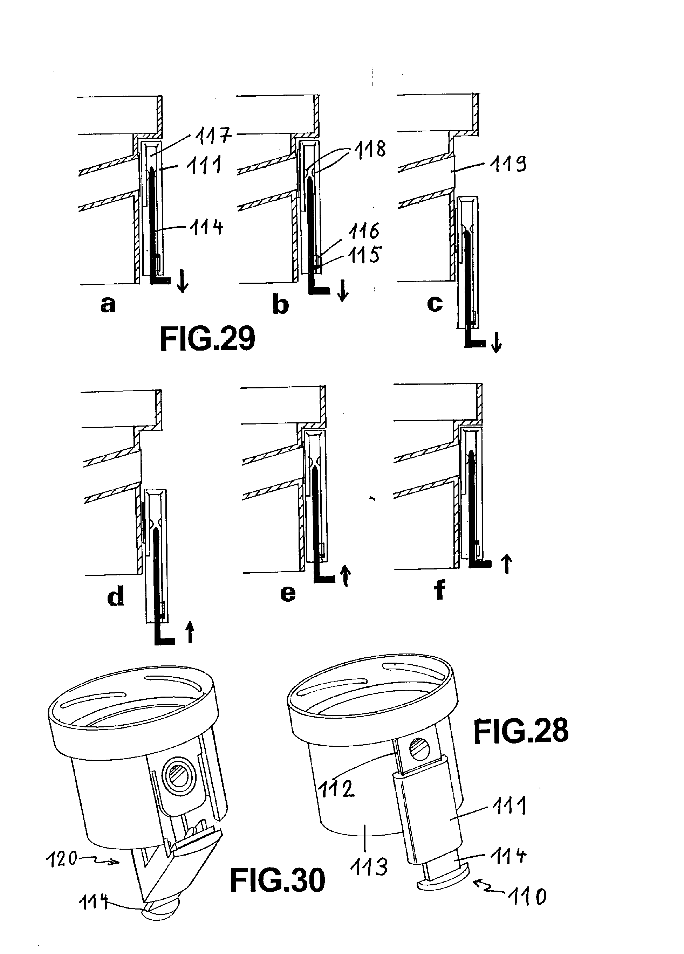

Les fig. 28 et 29 a, b, c, d, e et f montrent plus en détails un mode d'exécution d'un obturateur coulissant 110, similaire à l'obturateur coulissant 96 de la fig. 22 ou l'obturateur coulissant des fig. 11 et 12, mais fonctionnent en deux temps pour améliorer l'étanchéité. L'obturateur comprend une pièce 111 coulissant sur deux nervures 112 solidaires de la paroi latérale 113 du dispositif distributeur; cette pièce est de préférence réalisée en un matériau rigide dans son ensemble, sauf sa face intérieure qui a une certaine élasticité. Elle est creuse et accueille dans une cavité 117 une languette 114 coulissant à l'intérieur de la première pièce. Le coulissement de la languette à l'intérieur de la première pièce est limité par un goujon 115 de la languette coulissant dans une rainure 116 de la première pièce. La languette présente le profil d'un L, la petite branche du L pouvant être poussée au moyen de l'extrémité du doigt de l'utilisateur. La cavité 117 de la première pièce 111 est munie de deux renflements intérieurs 118. Le fonctionnement de l'obturateur est illustré par les fig. 29 a, b, c, d, e et f. Sur la fig. 29 a, l'obturateur est en position fermée. La languette 114 appuie sur le renflement 118 situé du côté de l'orifice externe 119 du dispositif distributeur et appuie la face intérieure élastique de la première pièce 111 contre cet orifice. Dans la fig. 29 b, la languette a été tirée vers le bas et les renflements 118 sont libérés; la première pièce s'en trouve légèrement désépaissie, ce qui facilite son coulissement. Le goujon 115 de la deuxième pièce étant en butée dans la rainure 116 de la première pièce, une poursuite de la traction sur la petite branche du L provoque le coulissement de la première pièce 111 sur les nervures 112, comme l'illustre la fig. 29 c, dégageant l'orifice externe. Dans la fig. 29 d, l'action du doigt de l'utilisateur est inversée, et la première pièce commence à revenir en direction de la position d'obturation. Dans la fig. 29 e, la première pièce est en regard de l'orifice 119, mais la languette n'est pas encore engagée entre les renflements 118, de sorte que l'étanchéité n'est pas encore assurée. Dans la figure 29 f, la languette est enfoncée entre les deux renflements internes de la première pièce, l'étanchéité est assurée; cette position est identique à celle de la fig. 29 a.

La fig. 30 montre un système d'obturation basculant fonctionnant en deux temps. Il comprend un obturateur 120 basculant similaire à ceux des modes d'exécution des fig. 20-21 ou 25-27. Le pourtour de l'orifice externe est muni de deux bossages d'étanchéité identiques à ceux de la fig. 4. L'ensemble formé par l'étrier et la plaquette d'obturation est creux et reçoit une languette similaire à celle des fig. 28-29. Le fonctionnement est similaire à celui illustré par les fig. 29 a-f.

On constate que les diverses formes de réalisation décrites et évoquées ci-dessus présentent de multiples avantages : l'ensemble forme un assemblage rigide et qui hormis l'obturateur ne comporte aucune pièce mobile. Cet assemblage peut être déplacé, renversé, agité sans difficulté de sorte que le produit en particules reste déformable, susceptible de s'écouler à travers les ouvertures décrites. Un dimensionnement judicieux du conduit et des ouvertures assure un déroulement régulier des opérations de distribution et de dosage.

Les produits avec lesquels les dispositifs décrits seront avantageusement utilisés, sont très nombreux et comportent principalement des produits alimentaires : poudres de sucre, de cacao, de café soluble, produits lyophilisés, épices, thé, condiments, produits en grains, comme le riz, le blé, le café, etc. Cependant ils peuvent également comprendre des produits d'usage courant, non alimentaire, des poudres à lessive, par exemple.

## Revendications

1. Dispositif distributeur-doseur (1, 21, 41, 83) d'un produit en particules solides associé à une extrémité frontale (3, 23, 43, 81) d'un récipient à paroi latérale rigide ou semi-rigide contenant le dit produit, le dit dispositif comprenant un conduit (11, 31, 51, 61, 86) transversal d'axe rectiligne dont une première extrémité forme un orifice latéral externe (7, 27, 47, 65, 87, 119) de sortie du produit et dont une deuxième extrémité forme un orifice interne (13, 33, 43, 67, 88), communiquant avec l'espace intérieur du récipient contenant le produit et des moyens d'obturation (15, 66, 75, 96, 99, 110, 120) du dit orifice externe, **caractérisé en ce que** l'inclinaison du dit axe rectiligne (Z1 Z2, Z3, Z4, Z6) est choisie de sorte que sa distance, au niveau de l'orifice interne, par rapport à la dite extrémité frontale est inférieure à sa distance par rapport à la même extrémité frontale au niveau de l'orifice externe de sortie du produit.

2. Dispositif distributeur-doseur selon la revendication 1, la dite extrémité frontale étant le fond du récipient.

3. Dispositif distributeur-doseur selon la revendication 1, la dite extrémité frontale étant un couvercle amovible du récipient.

4. Dispositif distributeur-doseur selon l'une des revendications 1 à 3, **caractérisé en ce que** la face intérieure de la dite extrémité frontale est conformée de manière à constituer une trémie ouverte sur l'espace intérieur du récipient de manière à canaliser le dit produit en particules vers le dit orifice interne du conduit transversal lorsque le récipient est positionné avec la dite extrémité frontale vers le bas.

5. Dispositif selon la revendication 4, **caractérisé en ce que** la dite trémie comprend une surface oblique recouvrant partiellement la dite extrémité frontale, en séparant partiellement l'espace intérieur du récipient dudit conduit.

6. Dispositif selon la revendication 5, **caractérisé en ce que** le dit conduit est cylindrique et présente une génératrice commune avec la dite surface oblique.

7. Dispositif selon la revendication 5, **caractérisé en ce que** le dit conduit est tronconique et présente une génératrice commune avec la dite surface oblique.

8. Dispositif selon la revendication 5, **caractérisé en ce que** la dite surface oblique constitue une paroi du dit conduit.

9. Dispositif distributeur-doseur selon l'une des revendications 5 à 8, **caractérisé en ce que** la dite surface oblique est plane.

10. Dispositif distributeur-doseur selon l'une des revendications 8 ou 9, **caractérisé en ce que** le profil du dit conduit est choisi parmi les profiles parallélépipédiques, prismatiques et pyramidaux.

11. Dispositif selon la revendication 10, **caractérisé en ce que** les extrémités des parois latérales du dit conduit viennent au contact de la paroi latérale du récipient.

12. Dispositif selon l'une des revendications 5 à 10, **caractérisé en ce que** l'orifice interne du conduit transversal débouche dans une portion de paroi adjacente à la surface oblique et reliant la dite surface oblique à la dite extrémité frontale.

13. Dispositif distributeur-doseur selon l'une des revendications 5 à 12, **caractérisé en ce que** la surface oblique et le conduit transversal présentent une découpe à l'aplomb de la partie du dit conduit jouxtant l'orifice interne.

14. Dispositif distributeur-doseur selon l'une des revendications 8 à 13, **caractérisé en ce que** la surface oblique porte au moins une ailette s'étendant dans le conduit transversal dans la direction du dit conduit.

15. Dispositif distributeur-doseur selon l'une des revendications précédentes, **caractérisé en ce que** le dit conduit transversal présente au moins une paroi de séparation intérieure longitudinale, agencée de façon à subdiviser le dit conduit en un conduit principal et un conduit secondaire.

16. Dispositif distributeur-doseur selon l'une des revendications 1 à 14, **caractérisé en ce que** le dit conduit transversal porte un conduit latéral communiquant avec l'espace intérieur du récipient.

17. Dispositif distributeur-doseur selon l'une des revendications 1 à 14, **caractérisé en ce que** le dit conduit transversal présente des perforations communiquant avec l'espace intérieur du récipient.

18. Dispositif distributeur-doseur selon l'une des revendications précédentes, **caractérisé en ce que** les dits moyens d'obturation comprennent un obturateur mobile basculant, agencé dans la dite extrémité frontale de telle sorte que dans la position obturée de l'orifice externe, les dits moyens obturateurs ne dépassent pas du contour du dit récipient.

19. Dispositif distributeur-doseur selon la revendication 18, **caractérisé en ce que** le dit obturateur mobile porte un élément d'obturation de forme conjuguée à la forme de l'orifice externe constitué d'un matériau élastique.

20. Dispositif distributeur-doseur selon la revendication 19, **caractérisé en ce que** le dit élément d'obturation est une bille mobile en rotation autour d'un axe porté par le dit obturateur basculant.

21. Dispositif distributeur-doseur selon la revendication 18, **caractérisé en ce que** le dit élément d'obturation est une plaque et que le pourtour du dit orifice externe porte deux bossages circulaires concentriques entourant le dit orifice.

22. Dispositif distributeur-doseur selon l'une des revendications 1 à 17, **caractérisé en ce que** les moyens d'obturation comprennent un obturateur mobile coulissant agencé sur la face extérieure de la paroi latérale du récipient.

23. Dispositif distributeur-doseur selon la revendication 22, **caractérisé en ce que** le dit obturateur mobile comprend une plaque en matériau élastique agencé de manière à pouvoir venir en regard du pourtour du dit orifice externe, et que le dit obturateur coulissant comprend des moyens d'étanchéité capables d'augmenter la pression exercée par la dite plaque élastique sur le pourtour du dit orifice externe en position obturée.
